# EUROPEAN PATENT APPLICATION

(11) **EP 4 403 531 A1**
(43) Date of publication of application: **24.07.2024**
(21) Application number: 22867082.4
(22) Date of filing: 12.07.2022
(51) Int. Cl.: C03C 10/10, C03B 32/02, C03C 10/12, C03C 21/00

(54) **CRYSTALLIZED GLASS**

(30) Priority: 13.09.2021 JP 2021148510
(71) Applicant: Ohara, Inc., Sagamihara-shi, Kanagawa 252-5286 (JP)
(72) Inventor: ODA, Nozomu, Sagamihara-Shi Kanagawa 252-5286 (JP)
(74) Representative: SSM Sandmair
(86) International application number: PCT/JP2022/027481
(87) International publication number: WO 2023/037760

(57) **Abstract**

Provided is a very strong and transparent crystallized glass. This crystallized glass is characterized by containing, by oxide-equivalent mass%, 40.0-55.0% of a SiO₂ component, 10.0-30.0% of an Al₂O₃ component, 10.0-30.0% of a MgO component, 5.0-15.0% of a TiO₂ component, and more than 0% and up to 8.0% of a Na₂O component, where the Vickers hardness (Hv) is 700 or higher and the spectral transmittance at 400 nm is 50% or higher with regard to a 1 mm-thick sample.

## Description

### FIELD OF THE DISCLOSURE

**The** present disclosure relates to transparent crystallized glass having a novel composition.

### BACKGROUND OF THE DISCLOSURE

Conventionally, glass has been used as cover glass for protecting a display of portable electronic devices such as smartphones and tablet PCs, and as a protector for protecting a lens of in-vehicle optical devices. Furthermore, in recent years, there is a demand for use in a housing or the like serving as an exterior of an electronic device. And there is an increasing demand for a material having a high strength so that such devices can withstand a severe use. Furthermore, as for these applications, there is a demand for a material maintaining high strength and having high transmittance.

There is crystallized glass obtained by increasing the strength of glass. The crystallized glass is obtained by precipitating crystals inside the glass, and has a superior mechanical strength to glass.

Patent Document 1 discloses a material composition of a crystallized glass substrate for an information magnetic recording medium. Patent Document 1 states that a glass ceramic substrate having a crystalline phase such as enstatite has a high Young's modulus corresponding to a high-speed rotation and is suitable for an information magnetic recording medium.

The present inventors have applied for novel glass in Japanese Patent Application No. 2020-134653. The glass can be crystallized and chemically strengthened, which can increase its mechanical strength. However, applications requiring crystallized glass with good transmittance and high transparency while maintaining the mechanical strength of the crystallized glass obtained in the examples of the present application are desired.

### [Prior Art Document]

### [Patent document]

[Patent Document 1] Japanese Unexamined Patent Application Publication No. 2001-048581

### SUMMARY OF THE DISCLOSURE

### [Technical Problem]

An object of the present disclosure is to provide a high-strength and transparent crystallized glass.

### [Solution to Problem]

The present inventors, through intensive studies to solve the above problem, found that crystallized glass obtained by crystallizing glass having a predetermined composition under predetermined conditions has high transmittance and hardness, and by chemically strengthening the crystallized glass, the hardness can be further increased. Thus, the present inventors completed the present disclosure. The contents of the present disclosure are specifically described below.

(1) A crystallized glass, containing, by oxide-equivalent mass%,
   40.0 to 55.0% of a SiO₂ component,
   10.0 to 30.0% of an Al₂O₃ component,
   10.0 to 30.0% of a MgO component,
   5.0 to 15.0% of a TiO₂ component, and
   more than 0% and up to 8.0% of a Na₂O component, in which
   the crystallized glass has a Vickers hardness (Hv) of 700 or more, and with regard to a 1-mm thick sample, a spectral transmittance is 50% or more at 400 nm.
(2) The crystallized glass according to (1), containing, by oxide-equivalent mass%,
   0 to 5.0% of a B₂O₃ component,
   0 to 5.0% of a P₂O₅ component,
   0 to 4.0% of a LiO₂ component,
   0 to 5.0% of a K₂O component,
   0 to 5.0% of a CaO component,
   0 to 5.0% of a SrO component,
   0 to 5.0% of a BaO component,
   0 to 5.0% of a ZnO component,
   0 to 8.0% of a ZrO₂ component, and
   0 to 2.0% of a Sb₂O₃ component.
(3) The crystallized glass according to (1) or (2), containing granular microcrystals with a particle size of 1 nm to 50 nm.
(4) The crystallized glass according to any one of (1) to (3), the crystallized glass being strengthened glass having a compressive stress layer on a surface.

### [Effects Of The Disclosure]

According to the present disclosure, it is possible to obtain a high-strength transparent crystallized glass.

The crystallized glass or strengthened crystallized glass according to the present disclosure may be used for a protective member and the like of a device by taking advantage of its high strength and transparency. The crystallized glass or strengthened crystallized glass according to the present disclosure may be utilized as cover glass or a housing of a smartphone, a member of a portable electronic device such as a tablet PC and a wearable terminal, and a protective protector, a member of a substrate for a head-up display, or the like used in a transport vehicle such as a car and an airplane. Besides, the crystallized glass or strengthened crystallized glass according to the present disclosure may be used for other electronic devices and machinery, a building member, a member for a solar panel, a member for a projector, and cover glass (windshield) for eyeglasses and a watch, for example.

### BRIEF DESCRIPTION OF THE DRAWINGS

FIG. 1 is a TEM photograph of a crystalline phase of crystallized glass obtained in Example 4.
FIG. 2 is an electron diffraction pattern of the crystalline phase of the crystallized glass obtained in Example 4.
FIG. 3 is a TEM photograph of the crystalline phase of the crystallized glass obtained in Comparative Example 1.
FIG. 4 is an electron diffraction pattern of the crystalline phase of the crystallized glass obtained in Comparative Example 1.
FIG. 5 is a diagram illustrating transmittance of 1-mm thick crystallized glass substrates obtained in Example 4 and Comparative Example 1 with respect to a wavelength.

### DETAILED DESCRIPTION OF THE EXEMPLARY EMBODIMENTS

Embodiments and examples of the present disclosure will be described in detail below. However, the present disclosure is not limited to the following embodiments and examples, and may be implemented by making modifications as appropriate within the scope of the purpose of the present disclosure.

Crystallized glass can be obtained by heat-treating glass to precipitate crystals inside the glass. Generally, a crystalline phase of the crystallized glass is determined by using a peak angle appearing in an X-ray diffraction pattern in X-ray diffraction analysis, and by using, if necessary, an electron diffraction method.

The crystallized glass of the present disclosure contains, for example, (Mg, Ti)O, MgAl₂Si₂O₈, MgSiO₃, MgTi₂O₅, Mg₂SiO₄, Na₂TiSiO₅, MgAl₂O₄, Mg₂Al₂Si₃O₁₂, or a solid solution of the substances, as a crystalline phase.

The crystals include granular microcrystals with a lower limit of a particle size as preferably 1 nm or more, and an upper limit of a particle size as preferably 50 nm or less, more preferably 30 nm or less, and even more preferably 20 nm or less.

When the content of a constituent component of the glass and the crystallized glass (hereinafter, simply referred to as "glass") is described, "by oxide-equivalent mass%" means, if it is assumed that all the constituent components included in the glass are dissolved and converted into oxides, when a total amount of the oxides is 100 mass%, an amount of oxides in each of the components contained in the glass is expressed by mass%. As used herein, a content of each component is expressed as "by oxide-equivalent mass%", unless otherwise specified.

As used herein, "A% to B%" represents A% or more and B% or less. Further, "0" in "containing 0 to C%" refers to a content of 0%.

The composition range of each component constituting the glass according to the present disclosure will be specifically described below.

A SiO₂ component is an essential component forming a glass network structure. The lower limit of the content of the SiO₂ component may be, for example, 40.0% or more, 41.0% or more, or 42.0% or more. The upper limit of the content of the SiO₂ component may be, for example, 55.0% or less, 50.0% or less, 49.0% or less, or 48.0% or less.

Similarly to SiO₂, an Al₂O₃ component is an essential component that forms the glass network structure and may serve as a component constituting a crystalline phase by heat treatment of glass yet to be crystallized. Also, such a component contributes to the improvement of mechanical strength. The lower limit of the content of the Al₂O₃ component may be, for example, 10.0% or more, 13.5% or more, or 15.0% or more. The upper limit of the content of the Al₂O₃ component may be, for example, 30.0% or less, 25.0% or less, or 23.0% or less.

A MgO component is one of the components that may constitute the crystalline phase and is an essential component. Also, such a component contributes to the improvement of mechanical strength. The lower limit of the content of the MgO component may be, for example, 10.0% or more, 13.5% or more, or 15.0% or more. The upper limit of the content of the MgO component may be, for example, 30.0% or less, 25.0% or less, or 23.0% or less.

A TiO₂ component is an essential component that plays a role of nucleation for precipitating crystals. Also, such a component contributes to the improvement of mechanical strength. The lower limit of the content of the TiO₂ component may be, for example, 5.0% or more, 6.0% or more, or 7.0% or more. The upper limit of the content of the TiO₂ component may be, for example, 15.0% or less, 14.0% or less, or 13.0% or less.

A Na₂O component is an essential component involved in chemical strengthening and contributes to the improvement of mechanical strength. The lower limit of the content of the Na₂O component may be, for example, more than 0%, 0.5% or more, 1.0% or more, 2.0% or more, or 3.0% or more.

If the Na₂O component is 8.0% or less, devitrification, phase separation, or non-uniformity of the glass can be suppressed. Therefore, the upper limit of the content of the Na₂O component may be, for example, 8.0% or less, 6.0% or less, 5.0% or less, or 4.5% or less.

A B₂O₃ component and a P₂O₅ component can be added as optional components. The optional components may or may not be contained. The content may be 0% or more.

The upper limit of the content of these components may be, for example, 5.0% or less, 3.0% or less, or 2.0% or less, respectively. The content of the B₂O₃ component may be 0 to less than 2.0% or 0 to 1.0%.

A Li₂O component is an optional component involved in chemical strengthening and contributes to the improvement of mechanical strength.

If the Li₂O component is 4.0% or less, devitrification, phase separation, or non-uniformity of the glass can be suppressed. Therefore, the upper limit of the content of the Li₂O component may be, for example, 4.0% or less, 3.0% or less, 2.0% or less, or 1.0% or less.

Both the Na₂O component and the Li₂O component are involved in chemical strengthening, but if the total content is 5.0% or less, deterioration of devitrification can be suppressed, and so the total content is preferably 5.0% or less, and more preferably 4.0% or less.

A K₂O component, a CaO component, a SrO component, a BaO component, and a ZnO component can be added as optional components. The upper limit of the content of these components may be, for example, 5.0% or less, 3.0% or less, or 2.0% or less, respectively.

In particular, when the CaO component and the SrO component are contained in an amount of more than 0%, the lower limit can be preferably more than 0%, and more preferably 0.5% or more in order to improve mechanical strength.

The ZrO₂ component is an optional component that can play a role of nucleation for precipitating crystals. The upper limit of the content of the ZrO₂ component may be, for example, 8.0% or less, 5.0% or less, or 3.0% or less.

As long as the effect of the present disclosure is not impaired, the glass may contain a Gd₂O₃ component, a TeO₂ component, a FeO component, a La₂O₃ component, a Y₂O₃ component, a Nb₂O₅ component, a Ta₂O₅ component, and a WO₃ component as optional components. The content of each component may be 0 to 2.0% or 0.5 to 1.0%.

**The** glass may contain, as a clarifying agent, from 0% to 2.0%, preferably from 0.005% to 1.0%, and more preferably from 0.01% to 0.5% of one or more selected from a Sb₂O₃ component, a SnO₂ component, and a CeO₂ component.

There is a tendency to avoid the use of components including Pb, Th, Cd, Tl, Os, Be, and Se, which are considered in recent years to be harmful chemical substances, and therefore, it is preferable that such components are substantially not contained.

The above-mentioned blending amounts may be appropriately combined.

A total of the SiO₂ component, the Al₂O₃ component, the MgO component, the TiO₂ component, and the Na₂O component may be 80.0% or more, 85.0% or more, 90.0% or more, 92.0% or more, or 95.0% or more.

The strengthened crystallized glass according to the present disclosure includes a compressive stress layer on the surface. Assuming that an outermost surface has a depth of zero, the compressive stress of the outermost surface (surface compressive stress) is CS. DOLzero denotes a depth of the compressive stress layer when the compressive stress is 0 MPa.

By forming a compressive stress layer on the surface, it is possible to prevent a crack from growing and enhance the mechanical strength. The surface compressive stress value (CS) of the compressive stress layer is preferably 200 MPa or more, more preferably 350 MPa or more, and even more preferably 450 MPa or more. The upper limit of CS may be, for example, 1000 MPa or less or 900 MPa or less.

The central tensile stress (CT) is preferably 3 MPa or more, more preferably 4 MPa or more, and even more preferably 10 MPa or more. The upper limit of CT may be, for example, 60 MPa or less or 50 MPa or less.

If the compressive stress layer is deep, even if a deep crack occurs on the surface, it is possible to prevent the crack from growing and the substrate from breaking. The depth (DOLzero) of the compressive stress layer is preferably 4 µm or more, more preferably 5 µm or more, and even more preferably 10 µm or more. The upper limit may be, for example, 80 µm or less or 60 µm or less.

A lower limit of a thickness of the glass substrate may be, for example, 0.10 mm or more, 0.20 mm or more, or 0.40 mm or more. An upper limit of the thickness of the glass substrate may be, for example, 10.00 mm or less, 5.00 mm or less, 1.00 mm or less, 0.90 mm or less, or 0.80 mm or less.

The Vickers hardness (Hv) of the crystallized glass or strengthened crystallized glass measured in Examples is preferably 700 or more, and more preferably 800 or more. When such impact resistance is provided, the crystallized glass or strengthened crystallized glass withstands an impact generated when dropped if used as a protective member.

The spectral transmittance of the crystallized glass or strengthened crystallized glass at 400 nm is desirably 50.00% or more, more preferably 60.00% or more, and most preferably 70.00% or more.

It is preferable that the crystallized glass or strengthened crystallized glass has a high visible light transmittance, particularly a high transmittance of light on the shorter wavelength side of the visible light, and thereby has little coloration.

The shortest wavelength (λ80) exhibiting a spectral transmittance of 80% in a 1-mm thick sample of the crystallized glass or strengthened crystallized glass according to the present disclosure has an upper limit of preferably 500 nm or less, more preferably 480 nm or less, and even more preferably 450 nm or less. The shortest wavelength (λ80) exhibiting a spectral transmittance of 80% can have a lower limit of, for example, 200 nm or more or 300 nm or more.

The shortest wavelength (λ5) exhibiting a spectral transmittance of 5% in a 1-mm thick sample of the crystallized glass or strengthened crystallized glass of the present disclosure has an upper limit of preferably 400 nm or less, more preferably 380 nm or less, and even more preferably 350 nm or less. The shortest wavelength (λ5) exhibiting a spectral transmittance of 5% can have a lower limit of, for example, 150 nm or more or 200 nm or more.

The glass and crystallized glass according to the present disclosure may be produced by the following method, for example.

The raw materials are uniformly mixed, and the resulting mixture is melted, stirred for homogenization, and then molded and slowly cooled to produce glass. Next, the glass is crystallized to produce crystallized glass. Further, by chemically strengthening crystallized glass as a base material, a strengthened crystallized glass can be formed.

The glass is subjected to heat treatment to precipitate crystals inside the glass. The heat treatment may be performed at a one-stage temperature or a two-stage temperature. The crystallization temperature and time are adjusted so that the crystallized glass does not become cloudy, causing the transmittance to decrease.

The two-stage heat treatment includes a nucleation step of firstly performing heat treatment at a first temperature and a crystal growth step of treating, after the nucleation step, the glass by heat at a second temperature higher than that in the nucleation step.

In the one-stage heat treatment, the nucleation step and the crystal growth step are continuously performed at the one-stage temperature. Generally, the temperature is raised to a predetermined heat treatment temperature, is maintained for a certain period of time after reaching the predetermined heat treatment temperature, and is then lowered.

If the heat treatment is performed at the one-stage temperature, for example, when the heat treatment temperature is 600°C to 750°C, the retention time at the heat treatment temperature is preferably 30 minutes to 500 minutes, and more preferably 60 minutes to 400 minutes. For example, when the heat treatment temperature exceeds 750°C, the retention time at the heat treatment temperature is preferably less than 30 minutes.

An example of a method for forming the compressive stress layer includes a chemical strengthening method in which an alkaline component present in a surface layer of the crystallized glass substrate is subject to exchange reaction with an alkaline component with a larger ionic radius to form a compressive stress layer on the surface layer. Other examples include a heat strengthening method in which the crystallized glass substrate is heated, and then, is quenched and an ion implantation method in which ions are implanted into the surface layer of the crystallized glass substrate.

The chemical strengthening method may be implemented according to the following steps, for example. Crystallized glass is contacted to or immersed in a molten salt of a salt containing potassium or sodium, for example, potassium nitrate (KNO₃), sodium nitrate (NaNO₃) or a mixed salt or a complex salt thereof. The treatment of contacting or immersing the crystallized glass to or in the molten salt (chemical strengthening treatment) may be performed in one stage or in two stages.

For example, in the case of the two-stage chemical strengthening treatment, firstly, the crystallized glass is contacted to or immersed in a sodium salt or a mixed salt of potassium and sodium heated at 350°C to 550°C for 1 to 1440 minutes. Subsequently, secondly, the resultant glass is contacted to or immersed in a potassium salt or a mixed salt of potassium and sodium heated at 350°C to 550°C for 1 to 1440 minutes.

In the case of the one-stage chemical strengthening treatment, the crystallized glass is contacted to or immersed in a salt containing potassium or sodium heated at 350°C to 550°C or a mixed salt thereof for 1 to 1440 minutes, preferably 90 to 600 minutes.

The heat strengthening method is not particularly limited, but, for example, the crystallized glass may be heated to 300°C to 600°C, and thereafter, be subjected to rapid cooling such as water cooling and/or air cooling to form the compressive stress layer by a temperature difference between the surface and the inside of the crystallized glass substrate. Besides, when the heat strengthening method is combined with the above chemical treatment method, it is possible to more effectively form the compressive stress layer.

The ion implantation method is not particularly limited, but, for example, any ion may be collided on the surface of the crystallized glass (base material) with an acceleration energy and an acceleration voltage that would not destroy the surface of the base material to implant the ions into the surface of the base material. Thereafter, by performing heat treatment as necessary, it is possible to form the compressive stress layer on the surface in a similar manner as in the other methods.

### EXAMPLES

### Examples 1 to 6, Comparative Examples 1 and 2

### 1. Manufacture of glass and crystallized glass

Raw materials such as oxides, hydroxides, carbonates, nitrates, fluorides, chlorides, and metaphosphate compounds corresponding to a raw material of each component of glass were selected, and the selected raw materials were weighed and mixed uniformly to have the compositions (mass%) shown in Table 1.

Next, the mixed raw materials were fed into a platinum crucible and melted in an electric furnace in a temperature range from 1300°C to 1540°C depending on the degree of meltability of the glass composition. Subsequently, the molten glass was stirred and homogenized, cast into a mold, and slowly cooled to manufacture glass.

The obtained glass was subjected to one-stage heat treatment at the crystallization temperatures shown in Table 1 to prepare crystallized glass. In Examples 1 to 6, the retention time was 360 minutes at 750°C, and in Comparative Examples 1 and 2, the retention time was 360 minutes at 800°C. The crystallized glass in Examples 1 to 6 was transparent, and the crystallized glass in Comparative Examples 1 and 2 was cloudy. Besides, the glass used in Comparative Examples 1 and 2 had the same composition as Examples 1 and 2, and Comparative Examples 1 and 2 differed from Examples 1 and 2 only in terms of the crystallization temperature.

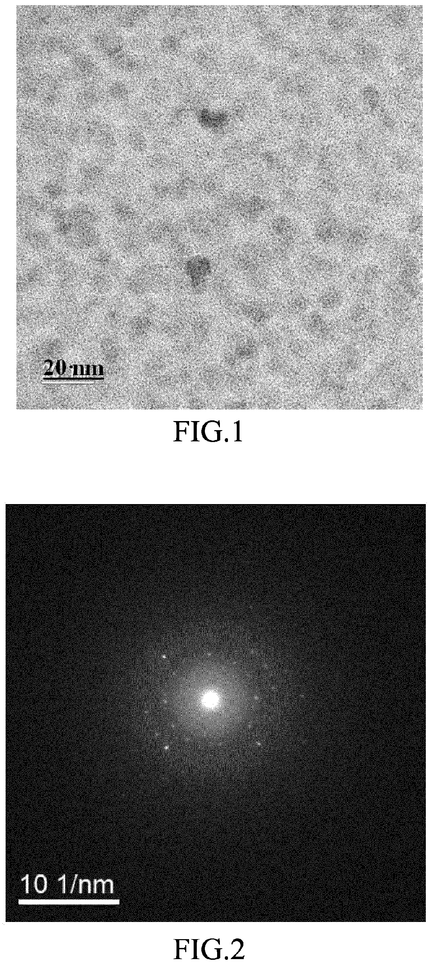

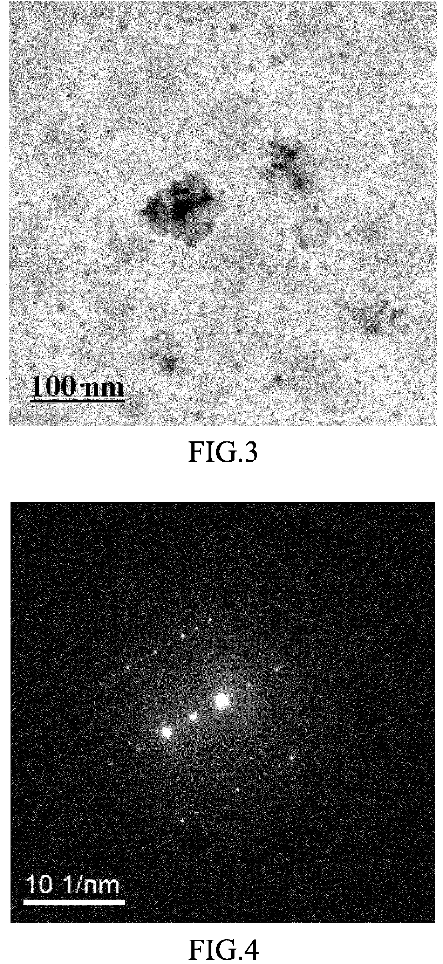

The presence or absence of crystals in the obtained crystallized glass of Example 4 and Comparative Example 1 was confirmed by TEM. The crystalline phase was confirmed using a 200 kV field emission transmission electron microscope JEM-2100F (manufactured by JEOL Ltd.) at an acceleration voltage of 200 kV during observation. FIG. 1 illustrates a TEM photograph of Example 4, and FIG. 2 illustrates an electron diffraction pattern. It was confirmed that (Mg, Ti)O was included as the crystalline phase in Examples 1 to 6. FIG. 3 illustrates a TEM photograph of Comparative Example 1, and FIG. 4 illustrates an electron diffraction pattern.

### 2. Chemical strengthening of crystallized glass

The crystallized glass thus produced was cut and ground, and in Examples 1 to 6 and Comparative Examples 1 and 2, the opposite surfaces were subjected to parallel polishing to result in a thickness of 1.00 mm, and a crystallized glass substrate was obtained.

In Examples 1 to 6 and Comparative Examples 1 and 2, the crystallized glass substrate was immersed in a KNO₃ salt bath at 500°C for eight hours (480 minutes) to perform chemical strengthening and obtain a strengthened crystallized glass.

### 3. Evaluation of crystallized glass and strengthened crystallized glass

The crystallized glass and strengthened crystallized glass were evaluated as follows. Table 2 shows the results.

### (1) Vickers hardness measurement

Table 2 shows the Vickers hardness (Hv) of the crystallized glass (before strengthening) and the strengthened crystallized glass (after strengthening). A square pyramid diamond indenter having an angle of 136°C between opposing sides was used to measure the Vickers hardness as a value obtained by dividing the load when the pyramid-shaped depression was formed on the test surface by the surface area (mm²) calculated from the length of the depression. The Vickers hardness was measured with a test load of 200 gf and a retention time of 15 seconds using a micro Vickers hardness tester HMV-G21D manufactured by Shimadzu Corporation.

### (2) Spectral transmittance

The spectral transmittance of a 1-mm thick sample of crystallized glass (before strengthening) with opposite surfaces subjected to parallel polishing was measured using a U-4100 spectrophotometer manufactured by Hitachi, Ltd. according to the Japan Optical Glass Industry Standard JOGIS-02 (2019)"Measuring Method for Color-Degree of Optical Glass".

λ80 and λ5 are wavelengths (nm) exhibiting a transmittance of 80% and 5% in the spectral transmittance curve.

The crystallized glass of Examples 1 to 6 had a spectral transmittance of 50% or more at 400 nm. The crystallized glass of Comparative Examples 1 and 2 had a spectral transmittance of around 13% at 400 nm.

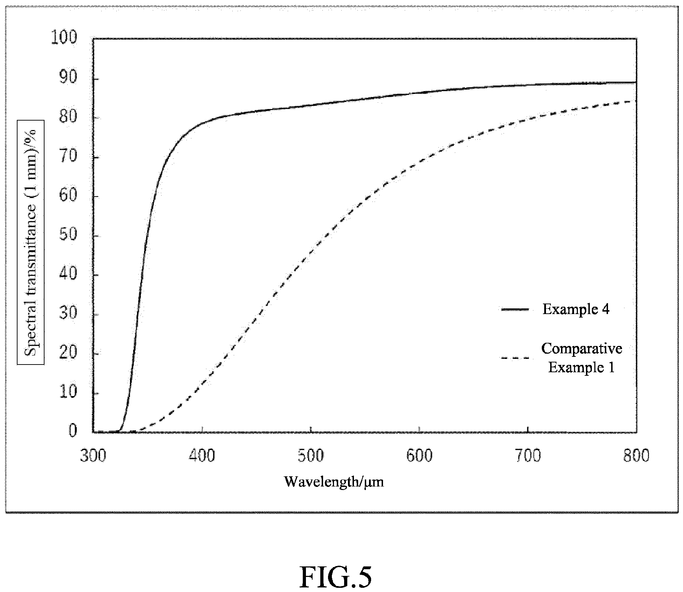

FIG. 5 illustrates the transmittance with respect to the wavelength for the 1-mm thick crystallized glass substrates obtained in Example 4 and Comparative Example 1.

### (3) Crystal diameter

The particle size (diameter) of the granular microcrystals was determined from a TEM image. The crystallized glass in Example 4 contained granular microcrystals with a particle size of 5 to 15 nm. The crystallized glass in Comparative Example 1 had a larger particle size than the crystallized glass of Examples 1 to 6, and contained granular microcrystals with a particle size of 50 to 100 nm.

### (4) Stress measurement

Stress was measured for the strengthened crystallized glass substrates. Table 2 shows the results. The surface compressive stress value (CS) was measured by using a glass surface stress meter FSM-6000LE series manufactured by Orihara Manufacturing Co., LTD. As a light source of the measurement device used in the CS measurement, a light source having a wavelength of 596 nm was selected. As the refractive index used in the CS measurement, a refractive index value at 596 nm was used. Besides, it is noted that the refractive index value at a wavelength of 596 nm was calculated by using a quadratic approximation expression from the measured values of the refractive index at the wavelengths of a C-line, a d-line, an F-line, and a g-line according to the V-block method specified in JIS B 7071-2:2018.

A value of a photoelastic constant at a wavelength of 596 nm used for the CS measurement was calculated by using a quadratic approximation expression from the measured values of the photoelastic constants at a wavelength of 435.8 nm, a wavelength of 546.1 nm, and a wavelength of 643.9 nm.

A depth DOLzero (µm) and a central tensile stress (CT) of the compressive stress layer was measured by using a scattered light photoelastic stress meter SLP-1000. For a wavelength of the measurement light source used for the DOLzero and the CT measurement, a light source having a wavelength of 640 nm was selected.

A value of a refractive index at 640 nm was used as a refractive index used in the DOLzero and the CT measurement. Besides, it is noted that the refractive index value at a wavelength of 640 nm was calculated by using a quadratic approximation expression from the measured values of the refractive index at the wavelengths of a C-line, a d-line, an F-line, and a g-line according to the V-block method specified in JIS B 7071-2:2018.

A value of the photoelastic constant at 640 nm used for the DOLzero and the CT measurement used for the measurement was calculated by using a quadratic approximation expression from the measured values of the photoelastic constants at a wavelength of 435.8 nm, a wavelength of 546.1 nm, and a wavelength of 643.9 nm.

As shown in Table 2, the crystallized glass in the Examples was transparent, whereas the crystallized glass in Comparative Examples 1 and 2 was cloudy. The crystallized glass could be chemically strengthened, resulting in an even higher Vickers hardness.

**[Table 1]**

| Ex. | Composition (mass%) | | | | | | | | | | | Crystallization temperature/°C |
|---|---|---|---|---|---|---|---|---|---|---|---|---|
| | SiO₂ | Al₂O₃ | Li₂O | Na₂O | K₂O | MgO | CaO | SrO | ZnO | TiO₂ | Sb₂O₃ | |
| 1 | 43.00 | 21.00 | | 4.00 | | 20.30 | 1.00 | 1.00 | | 9.60 | 0.10 | 750 |
| 2 | 42.87 | 20.94 | | 3.99 | | 18.54 | 1.00 | 1.00 | 1.99 | 9.57 | 0.10 | 750 |
| 3 | 45.05 | 18.02 | | 4.00 | 2.00 | 19.22 | 1.00 | 1.00 | | 9.61 | 0.10 | 750 |
| 4 | 45.69 | 18.27 | 0.61 | 4.06 | | 19.49 | 1.02 | 1.02 | | 9.75 | 0.10 | 750 |
| 5 | 45.73 | 18.29 | | 3.56 | 1.02 | 19.51 | 1.02 | 1.02 | | 9.76 | 0.10 | 750 |
| 6 | 45.73 | 18.29 | | 4.57 | | 19.51 | 1.02 | 1.02 | | 9.76 | 0.10 | 750 |

| Com. Ex. | Composition (mass%) | | | | | | | | | | | Crystallization temperature/°C |
|---|---|---|---|---|---|---|---|---|---|---|---|---|
| | SiO₂ | Al₂O₃ | Li₂O | Na₂O | K₂O | MgO | CaO | SrO | ZnO | TiO₂ | Sb₂O₃ | |
| 1 | 43.00 | 21.00 | | 4.00 | | 20.30 | 1.00 | 1.00 | | 9.60 | 0.10 | 800 |
| 2 | 42.87 | 20.94 | | 3.99 | | 18.54 | 1.00 | 1.00 | 1.99 | 9.57 | 0.10 | 800 |

**[Table 2]**

| Ex. | Spectral transmittance (thickness: 1 mm) | | | Hv0.2 | | CS/ MPa | DOLzero /µm | CT/ MPa |
|---|---|---|---|---|---|---|---|---|
| | 400 nm transmittance/ % | λ5/ nm | λ80/ nm | Before strengthening | After strengthening | | | |
| 1 | 78.4 | 332 | 415 | 799 | 809 | | | |
| 2 | 79.1 | 333 | 408 | 806 | 837 | | | |
| 3 | 82.0 | 330 | 384 | 761 | 822 | 545 | 38 | 16 |
| 4 | 78.6 | 331 | 415 | 802 | 875 | 804 | 10 | 10 |
| 5 | 82.1 | 332 | 386 | 765 | 827 | 492 | 7 | 4 |
| 6 | 82.2 | 332 | 385 | 773 | 825 | 631 | 5 | 3 |

| Com. Ex. | Spectral transmittance (thickness: 1 mm) | | | Hv0.2 | | CS/ MPa | DOL/µm | CT/ MPa |
|---|---|---|---|---|---|---|---|---|
| | 400 nm transmittance/ % | λ5/ nm | λ80/ nm | Before strengthening | After strengthening | | | |
| 1 | 12.3 | 372 | 706 | 877 | 937 | 622 | 33 | 17 |
| 2 | 13.0 | 371 | 698 | 869 | 930 | 617 | 34 | 21 |

## Claims

1. A crystallized glass, comprising, by oxide-equivalent mass%:
40.0 to 55.0% of a SiO₂ component;
10.0 to 30.0% of an Al₂O₃ component;
10.0 to 30.0% of a MgO component;
5.0 to 15.0% of a TiO₂ component; and
more than 0% and up to 8.0% of a Na₂O component, wherein
the crystallized glass has a Vickers hardness (Hv) of 700 or more, and with regard to a 1-mm thick sample, a spectral transmittance is 50% or more at 400 nm.

2. The crystallized glass according to claim 1, comprising, by oxide-equivalent mass%:
0 to 5.0% of a B₂O₃ component;
0 to 5.0% of a P₂O₅ component;
0 to 4.0% of a LiO₂ component;
0 to 5.0% of a K₂O component;
0 to 5.0% of a CaO component;
0 to 5.0% of a SrO component;
0 to 5.0% of a BaO component;
0 to 5.0% of a ZnO component;
0 to 8.0% of a ZrO₂ component; and
0 to 2.0% of a Sb₂O₃ component.

3. The crystallized glass according to claim 1 or 2, comprising granular microcrystals with a particle size of 1 nm to 50 nm.

4. The crystallized glass according to any one of claims 1 to 3, the crystallized glass being a strengthened glass having a compressive stress layer on a surface.
